# EUROPEAN PATENT SPECIFICATION

(11) **EP 3 242 908 B1**
(45) Date of publication and mention of the grant of the patent: **26.09.2018**
(21) Application number: 16704435.3
(22) Date of filing: 12.02.2016
(51) Int. Cl.: C08J 3/02, C08J 3/09, C08K 3/04, C08K 3/08, C08K 3/20, D01F 6/04, D01F 6/46

(54) **THERMALLY CONDUCTIVE COMPOSITES**
THERMISCH LEITENDE VERBUNDSTOFFE
COMPOSITES THERMIQUEMENT CONDUCTEURS

(30) Priority: 26.02.2015 EP 15156648
(43) Date of publication of application: 15.11.2017
(73) Proprietor: Philips Lighting Holding B.V., 5656 AE Eindhoven (NL)
(72) Inventor: HIKMET, Rifat, Ata, Mustafa, 5656 AE Eindhoven (NL); VAN HAL, Paulus, Albertus, 5656 AE Eindhoven (NL)
(74) Representative: Verweij, Petronella Daniëlle
(86) International application number: PCT/EP2016/053023
(87) International publication number: WO 2016/134984

(56) References cited:
- WO-A1-03/086724
- WO-A1-2014/047249
- CN-A- 101 541 110
- CN-A- 101 928 422
- CN-A- 103 788 461
- US-A- 4 151 126
- BIN ET AL.: POLYMER JOURNAL, vol. 39, no. 6, 2007, pages 598-609, XP002743536, cited in the application

## Description

### FIELD OF THE INVENTION

The invention relates to a method of preparing an article or filament comprising a composite material, being formed in a fused deposition modeling process or a 3D printing process, a use of a composite material in a fused deposition modeling process or a 3D printing process, and a filament for use in a fused deposition modeling process or a 3D printing process.

### BACKGROUND OF THE INVENTION

There is a need for materials with high thermal conductivity which may be processed in a straight-forward manner. These materials can be used in applications such as heat sinks and heat pipes. For these purposes, polymeric materials combined with heat conductive fillers can be used. However, in order to obtain high thermal conductivity it may be necessary to load the polymeric materials with high levels of filler material. Hitherto, it has proved difficult to achieve high filler loadings. One problem associated with high filling levels is that the mechanical and/or physical properties of the filled material may be compromised or adversely affected, for example the brittleness of the resulting composite material may increase to potentially unacceptable levels.

Combining UHMW polymers such as UHMW polyethylene (UHMW-PE) with filler materials has been suggested. However, such UHMW polymers tend to be difficult to process from the melt and using conventional methods. In manufacturing UHMW-PE based components, due to the high melt viscosity of UHMW-PE, conventional processing techniques such as injection moulding, screw extrusion and blow moulding tend not to be suitable. Due to the high viscosity of UHMW-PE, the polymer tends to swell instead of melt. Methods for processing UHMW-PE in solution have been suggested. For example Bin et al in Polymer Journal, Vol. 39, No 6, pp 598-609 (2007) disclose the preparation of UHMW-PE and multi-wall carbon nanotube (MWNT) composites using either decalin or paraffin as a solvent. However, the loading levels of MWNT reported in Bin *et al* are low. Also, the filler material is limited to the use of multi-wall carbon nanotubes.

Further applications are e.g. found in CN101541110A and CN101928422A disclosing a film material comprising UHMW-PE; or CN103788461A disclosing synthetic paper based on UHMW-PE. Further, WO2014/047249 discloses a thermally conductive composition comprising polymer material (e.g. UHMW-PW) and a thermally conductive filler, such as boron nitride. Further, WO03/086724A1 relates to granulates containing UHMW-PE and fillers and/or reinforcing agents. Further, US4151126 discloses polyolefin composites containing powdered carbon.

Hence, there is still a need for alternative and/or improved materials and methods of preparing materials which possess high thermal conductivity and, optionally, at the same time possess at least acceptable other properties such as physical and/or mechanical properties. It would also be desirable if said materials were suitable for use in fused deposition modeling and 3-D printing techniques.

### SUMMARY OF THE INVENTION

It is an object of the present invention to overcome these problems, and, *inter alia,* to provide a thermally conductive composite material and a method of preparing the composite material. It would be advantageous to achieve high levels of thermal conductivity and, optionally, acceptable or improved physical properties such as low density and/or acceptable or improved mechanical properties such as low levels of brittleness.

According to a first aspect of the invention, these and other objects may be achieved by a method of preparing an article or filament as defined in claim 1, comprising or consisting of a composite material comprising:
(a) forming a composition comprising a solvent, an ultrahigh molecular weight polymer and a filler material;
   wherein the filler material is selected from one or more of graphite, boron nitride, metallic particles, metallic oxide particles, graphite flakes ; and
   wherein the solvent includes one or more of decalin, xylene, paraffin oil, naphthalene;
(b) removing the solvent to form said composite material;
   wherein the filler material is present in the composite material in an amount of greater than 60 wt%, wherein the ultrahigh molecular weight polymer is present in an amount of at least 2 wt%, both based on the total weight of the dry components of the composite material;
(c) further comprising forming an article or filament comprising or consisting of the composite material; wherein the article is formed in a fused deposition modeling process or a 3-D printing process;
wherein the ultrahigh molecular weight polymer is selected from one or more of ultrahigh molecular weight polyethylene, ultrahigh molecular weight polypropylene, ultrahigh molecular weight polyacrylate, ultrahigh molecular weight isotactic polypropylene, ultrahigh molecular weight polymethylmethacrylate; wherein the ultrahigh molecular weight polymer is a polymer having a weight average molecular weight from 500,000 to 10,000,000.

In the composition formed in (a), the ultrahigh molecular weight polymer is dissolved in the solvent to form a solution thereof. The filler material may be insoluble, partially soluble or fully soluble in the solvent. The addition or presence of the filler material may form a suspension. In order to dissolve the UHMW polymer in the solvent, the composition or the solvent may be heated. For example, the composition or solvent may be heated to greater than 150 °C. In the method aspects of the invention, the UHMW polymer may be added to the solvent and/or the solvent may be added to the polymer to form a solution thereof. A suitable solvent or solvents for ultrahigh molecular weight polymers may include one or more organic solvents.

The inventors have surprisingly found that high levels of filler material (greater than 60 wt%) may be incorporated into a composite material comprising an ultrahigh molecular weight polymer by preparing the composite material via a method wherein the UHMW polymer and, optionally, the filler material, are in solution. The presence of the filler material may give rise to a suspension. The resulting composite material possesses a desirable conductivity and, optionally, at least acceptable mechanical and/or physical properties, for example at least acceptable levels of brittleness and/or low density. The resulting composite material is also suited for forming filaments and for use in 3-D printing and FDM, as claimed in claim 7.

As mentioned, by the term "ultrahigh molecular weight polymer", is herein meant a polymer having a weight average molecular weight from 500,000 to 10,000,000. The polymer may be a thermoplastic polymer.

In further aspects, the invention provides an article as defined in claim 8, e.g. a solid article, formed from the method or from the composite material or from the composition in accordance with the first, second and third aspects of the present invention respectively. Suitable articles include heat sinks and heat pipes. The article may consist of or comprise the composite material. The composite material, the method for forming the composite material and the composition are suitable for incorporating in a 3-D printing process and in fused deposition modeling (FDM) processes. The composite material may be formed into or provided in the form of a solid filament, as claimed in claim 8 The solid filament may be used in FDM or 3-D printing processes to form articles. The article may be in the form of a mould. The composite material, which may be in the form of a filament, may be melted, extruded and optionally laminated in a 3-D printing process or an FDM process in accordance with the present invention. The article may be a laminated structure.

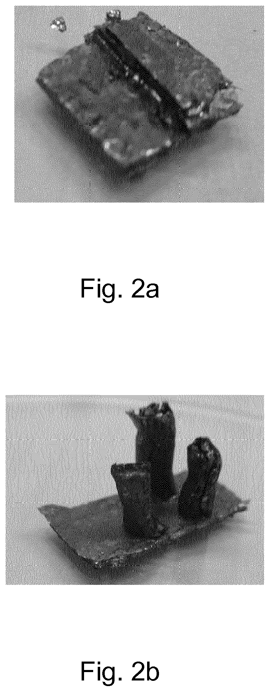

Figs. 2a and 2b show articles made according to the present invention prepared using a FDM technique.

### DETAILED DESCRIPTION

The present invention will now be described more fully hereinafter with reference to the accompanying drawings, in which currently preferred embodiments of the invention are Like reference numerals in the drawings refer to like elements throughout.

The present inventors have found that high levels of filler material, for example greater than 60 wt% may be incorporated into a composite material comprising an ultrahigh molecular weight polymer. The composite material possesses a desirable conductivity and, optionally, at least acceptable mechanical and/or physical properties, for example at least acceptable levels of brittleness and/or density.

In examples of the invention, the filler material is selected from one or more of the following: metallic particles, graphite, graphite flakes, boron nitride. The metallic particles may be selected from one or more of aluminum, copper, alloys, for example bronze, metal compounds, for example metal oxides. An example of a suitable metal oxide is aluminum oxide. The filler material may be a unidirectional conductor. The filler material may be selected from one or more ductile metals, for example the filler material may be selected from one or more of tin or copper.

The filler material is included in amounts of greater than 60 wt% based on the total weight of the dry components of the composite material. For example, the filler material may be included in amounts of greater than 70 wt%, such as greater than 80 wt%, such as greater than 85 wt%, such as greater than 90 wt%, such as at least 95 wt%, all based on the total weight of the dry components of the composite material. The filler material may be included in an amount of up to 98 wt%, or up to 95 wt%, based on the total weight of the dry components of the composite material.

The filler material may be present in the form of particles in one or more of a range of shapes, for example, fibers, elongated fibers, plate shaped particles, spherical particles, irregular shaped particles. The largest dimension of a given particle may be about 10 µm to about 500 µm.

The ultrahigh molecular weight polymer is selected from ultrahigh molecular weight polyethylene, or ultrahigh molecular weight polypropylene, or ultrahigh molecular weight polyacrylate, for example ultrahigh molecular weight polymethylmethacrylate. The polypropylene may be isotactic. The ultrahigh molecular weight polymer has a weight average molecular weight from 500,000 to 10,000,000.

The ultrahigh molecular weight polymer is included in amounts of at least 2 wt% based on the total weight of the dry components of the composite material. For example, the filler material may be included in amounts of at least 5 wt%, such as at least 10 wt%, such as at least 15 wt%, such as at least 20 wt%, such as at least 25 wt%, all based on the total weight of the dry components of the composite material. The ultrahigh molecular weight polymer may be included in an amount of up to 30 wt%, or up to 39 wt%, or less than 40 wt%, based on the total weight of the dry components of the composite material. The ultrahigh molecular weight polymer may be included in an amount so that the total amount of filler and ultrahigh molecular weight polymer is about 100% based on the total weight of the dry components of the composite material.

The solvent is suitable for dissolving the ultrahigh molecular weight polymer for use in the present invention. The ultrahigh molecular weight polymer or polymers may dissolve at least partially or completely in the solvent and form a solution thereof. In order to dissolve the UHMW polymer, the composition in (a) may be heated. The composition in (a) may be stirred. The solvent may be heated before and/or during combination with the UHMW polymer and/or filler material. For example, the solvent may be heated to greater than about 150°C. The composition may be heated to greater than about 150°C. The filler material may dissolve to at least some extent in the solvent but at least some of the filler material may remain in suspension or undissolved. A suitable solvent or solvents may depend on the nature of the ultrahigh molecular weight polymer and to some extent the filler The solvent or solvents is selected from one or more of decalin, xylene, paraffin oil, naphthalene. The one or more solvents may have a boiling temperature above about 150°C. The solvent may be removed in step (b) by evaporation or extraction. The solvent may be removed in step (b) by applying heat. The composite material may be further dried following removal of the solvent in step (b).

The composite material made may have a thermal conductivity in plane in the range of from about 2 W/mK to about 100 W/mK. The composite material made may have a thermal conductivity in plane in the range of from at least about 10 W/mK or from at least about 35 W/mK. The in plane thermal conductivity is measured by pressure induced orientation of the filler in the composite. The composite material made using graphite fillers may have a thermal conductivity in plane in the range of from about 2 W/mK to about 100 W/mK. The composite material made using graphite fillers may have a thermal conductivity in plane in the range of from at least about 10 W/mK or from at least about 35 W/mK. The in plane thermal conductivity is measured by pressure induced orientation of graphite platelets in the composite material.

The composite material made may have a thermal conductivity (perpendicular) in the range of from about 1 W/mK to about 30 W/mK. The composite material made may have a thermal conductivity (perpendicular) in the range of from at least about 4 W/mK or from at least about 8 W/mK. The composite material made using graphite may have a thermal conductivity (perpendicular) in the range of from about 1 W/mK to about 30 W/mK. The composite material made using graphite may have a thermal conductivity (perpendicular) in the range of from at least about 4 W/mK or from at least about 8 W/mK. The thermal conductivity (perpendicular) is measured by pressure oriented samples. Measurements are performed using a thermal conductivity analyzer. This technique comprises the use of a one sided, interfacial, heat reflectance sensor that applies a momentary, constant heat source to the sample. Thermal conductivity and effusivity are measured directly, providing a detailed overview of the thermal characteristics of the sample material.

The composite material made may possess a porosity in the range of about 5% to about 30% or from about 5% to about 15% or from about 10% to about 25%. The porosity of the composite material is estimated by measuring the mass and volume of the composite material and comparing it with the theoretical density value assuming zero porosity.

The composite material made may possess a density in the range of about 1 g/cm³ to about 5 g/cm³, for example about 1 g/cm³ to about 2 g/cm³. The composite material made may possess a density of less than about 5 g/cm³, for example less than about 2 g/cm³. The density of the composite material is measured by measuring the weight and volume of the composite materials and by using the theoretically expected density of the material.

The method, composite material and/or composition described herein is used in combination with a fused deposition modeling process or a 3-D printing process. The method, composite material and/or composition described herein may be used in a lamination technique for producing articles. Filaments of the composite material obtained in accordance with the present invention may be used to make a laminated structure or article. The solvent may be reduced or removed, for example by evaporation and/or heating, during and/or after the modeling and/or printing process. Reduction and/or removal of the solvent results in the viscosity of the solution increasing. In the fused deposition modeling process a thermoplastic filament may be heated to its melting point and then extruded. The extruded filament may then be deposited layer by layer to create a three dimensional object or article. The object or article may be formed by a lamination technique whereby layers of the extruded filament are pressed together using a heated laminator.

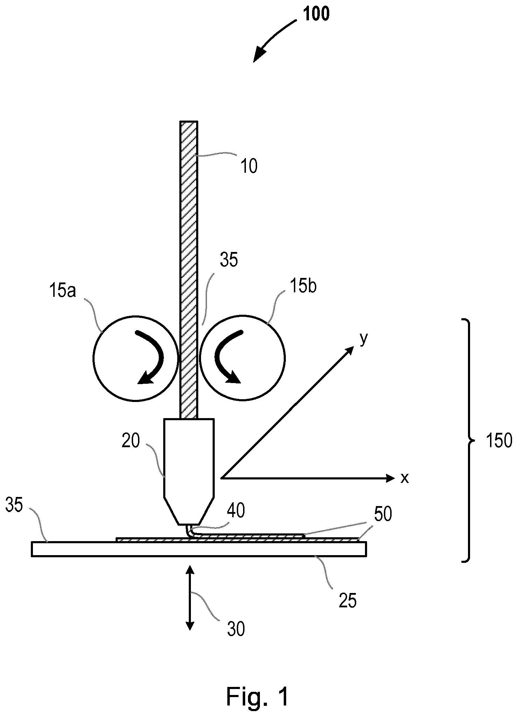

Fig. 1 illustrates an arrangement (100) comprising a filament of composite material (10), (or a composition) in accordance with the present invention being used in part of an FDM printer indicated generally at (150). The FDM printer comprises drive wheels (15a, 15b) shown counter-rotating in relation to each other, a heated print head (20) and a heated platform (25). The heated platform may be raised or lowered as indicated (30). In Fig 1, a filament of the composite material (10) is shown being fed through a capillary (35) formed by the gap between the two drive wheels (15a and 15b). The drive wheels (15a, 15b) are shown rotating in a clockwise and counter-clockwise motion respectively. The filament of composite material (10) may comprise some solvent in order to assist with the processing. The solvent may be residual solvent from the method in accordance with the present invention for making the composite material and/or the solvent may comprise fresh solvent combined with the composite material. After passing through the drive wheels (15a. 15b) the filament of composite material (10) is guided through a heated print head (20). The filament of composite material (10) is heated as it passes through the print head (20) and typically will be of a reduced thickness or diameter as it is ejected from the heated print head (20) as indicated at (40). The heated filament (40) is deposited on to a heated platform (25), the distance between the heated print head (20) and an upper surface (35) of the heated platform (25) being adjustable, as indicated at (30). The heated printer head (20) may be moved in a variety of directions (indicated by "x" and "y") relative to the heated platform (25) or vice versa. The direction "y" indicates a direction into the plane of the page and is approximately at right angles to the direction indicated by "x". Directions other than in the "x" and "y" direction are also possible. A range of articles with a range of shapes may be made in this manner. The deposited composite material (50) comprising a number of layers may be pressed together using a laminator (not shown). The laminator may be heated. The deposited (laminated) material may then be allowed to cool.

The method and the composition may further comprise the use of additive materials. These additional materials may decrease the amount of time taken for printing and/or modeling. Examples of suitable additive materials may be selected from one or more olefins, for example low molecular weight olefins. The olefin may be selected from one or more straight chain olefins, for example one or more C₂-C₁₈ straight chain olefins.

The composite material and the composition is suitable for forming articles. Examples of suitable articles are heat sinks, heat pipes, laminated structures. Prior to forming the articles, the composite material in accordance with the present invention may be in the form of filaments optionally in the presence of residual solvent. For use in a 3-D printing technique or an FDM process, the filament is typically a thermoplastic filament. In embodiments of the present invention, the filler may be provided by one or more ductile metals, for example tin or copper, which may be in the form of particles. Pressure may be applied to the composition or composite material comprising the one or more ductile metals to press them together in the formation of an article.

### Examples

The inventors investigated the thermal conductivities (in plane and perpendicular) as well as the porosity and density of composite materials comprising UHMW polymers prepared according to embodiments of the inventive method. The inventors also investigated exemplary filler materials and amounts thereof, solvent type and temperature in connection with the formation of composite materials.

In the Examples, the UHMW polyethylene (weight average molecular weight 6,000,000, density 0.95g/cm³; Hostalen Gur) graphite flake (density 2.16 g/cm³, 10 mesh; Alfa Aesar), boron nitride (density 2.1 g/cm³, Henze, HeBoFill®501).

### Example 1: Preparation of a filled UHMW-PE with graphite

A solution comprising 1g of UHMW polyethylene (the polymer), 10g graphite and 89 g Decalin (decahydronaphthalene) was prepared. The polymer was dissolved in the solvent above 150°C. The solution was heated and stirred vigorously. The solution was cooled and the solvent was extracted by evaporation leaving a composite of polymer and graphite. The composite (or filled polymer) comprised 91 wt% of graphite particles and 9 wt% of polymer which corresponds to about 18 % by volume of the polymer. The composite material formed in Example 1 was subsequently processed in an FDM printer and the resulting article is shown in Fig. 2a. The composite material was heated to its melting point and extruded between rollers and deposited via a heated print head onto a heated platform. Layers of the deposited composite material were pressed together using a heated laminator.

### Example 2: Preparation of a filled UHMW-PE with graphite

A solution comprising 0.5g of UHMW polyethylene (the polymer), 10g graphite and 49 g Decalin (decahydronaphthalene) was prepared. The polymer was dissolved in the solvent above 150°C. The solution was heated and stirred vigorously. The solution was cooled and the solvent was extracted by evaporation leaving a composite of polymer and graphite. The composite (or filled polymer) comprised 95 wt% of graphite particles and 5 wt% of polymer which corresponds to about 10 % by volume of the polymer.

### Example 3: Preparation of a filled UHMW-PE with boron nitride

A solution comprising 1g of UHMW polyethylene (the polymer), 10g boron nitride (BN) and 89 g Decalin (decahydronaphthalene) was prepared. The polymer was dissolved in the solvent above 150°C. The solution was heated and stirred vigorously. The solution was cooled and the solvent was extracted by evaporation leaving a composite of polymer and Boron Nitride. The composite (or filled polymer) comprised 91 wt% of boron nitride and 9 wt% of polymer which corresponds to about 18 % by volume of the polymer. The composite material formed in Example 3 was subsequently processed in an FDM printer and the resulting article is shown in Fig. 2b. The composite material was heated to its melting point and extruded between rollers and deposited via a heated print head onto a heated platform. Layers of the deposited composite material were pressed together using a heated laminator.

**Table 1: Conductivity, porosity and density measurements in connection with Examples 1-3**

| Composite Material | Thermal Conductivity (in plane) [W/mK] | Thermal Conductivity (perpendicular) [W/mK] | Density [g/cm³] | Porosity [%] |
|---|---|---|---|---|
| 91 wt% graphite, 9 wt% UHMW-PE | 10 | 4 | 1.5 | 25 |
| 95 wt% graphite, 5 wt% UHMW-PE | 36 | 8 | 1.9 | 10 |
| 91 wt% BN, 9 wt% UHMW-PE | 2 | | 1.7 | 15 |

From Table 1, it is evident that the thermal conductivities of the composite materials are highly anisotropic and may be tailored by varying the amount of polymer and/or filler in the composite material. In addition, the composite materials are highly porous which gives rise to a reduced density and hence lower weight.

The person skilled in the art realizes that the present invention is by no means limited to the preferred embodiments described above.

## Claims

1. A method of preparing an article or filament comprising or consisting of a composite material comprising:
(a) forming a composition comprising a solvent, an ultrahigh molecular weight polymer and a filler material wherein at least the ultrahigh molecular weight polymer is dissolved in said solvent to form a solution thereof; and
wherein the filler material is selected from one or more of graphite, boron nitride, metallic particles, metallic oxide particles, graphite flakes; and
wherein the solvent includes one or more of decalin, xylene, paraffin oil, naphthalene;
(b) removing the solvent to form said composite material;
wherein the filler material is present in the composite material in an amount of greater than 60 wt%, wherein the ultrahigh molecular weight polymer is present in an amount of at least 2 wt%, both based on the total weight of the dry components of the composite material;
(c) further comprising forming an article or filament comprising or consisting of the composite material; wherein the article is formed in a fused deposition modeling process or a 3-D printing process;
wherein the ultrahigh molecular weight polymer is selected from one or more of ultrahigh molecular weight polyethylene, ultrahigh molecular weight polypropylene, ultrahigh molecular weight polyacrylate, ultrahigh molecular weight isotactic polypropylene, ultrahigh molecular weight polymethylmethacrylate;
wherein the ultrahigh molecular weight polymer is a polymer having a weight average molecular weight from 500,000 to 10,000,000.

2. A method according to claim 1, wherein in (a) the filler material is present in the form of a suspension.

3. The method according to claim 1, wherein the filler material is present in an amount of greater than 80 wt% or greater than 90 wt%.

4. The method according to claim 1, wherein the ultrahigh molecular weight polymer is present in an amount of less than 40 wt% for example up to 39wt% and at least 2 wt% or at least 5wt%.

5. The method according to claim 1, wherein the composition consists of the filler material and the solution of ultrahigh molecular weight polymer.

6. The use of a composite material in a fused deposition modeling process or a 3-D printing process; said composite material comprising an ultrahigh molecular weight polymer and a filler material, wherein the filler material is present in the composite material in an amount of greater than 90 wt%; and wherein the filler material is suited to increase the thermal conductivity of the ultrahigh molecular weight polymer; and wherein the composite material is in the form of a filament.
wherein the ultrahigh molecular weight polymer is selected from one or more of ultrahigh molecular weight polyethylene, ultrahigh molecular weight polypropylene, ultrahigh molecular weight polyacrylate, ultrahigh molecular weight isotactic polypropylene, ultrahigh molecular weight polymethylmethacrylate;
wherein the filler material is selected from one or more of graphite, boron nitride, metallic particles, metallic oxide particles, graphite flakes;
wherein the ultrahigh molecular weight polymer is present in an amount of at least 2 wt% based on the total weight of the dry components of the composite material;
wherein the ultrahigh molecular weight polymer is a polymer having a weight average molecular weight from 500,000 to 10,000,000.

7. A filament for use in a fused deposition modeling process or a 3-D printing process comprising a composite material;
wherein the composite material comprises an ultrahigh molecular weight polymer and a filler material, wherein the filler material is present in the composite material in an amount of greater than 90 wt%; and
wherein the filler material is selected from one or more of graphite, boron nitride, metallic particles, metallic oxide particles, graphite flakes; and
wherein the ultrahigh molecular weight polymer is selected from one or more of ultrahigh molecular weight polyethylene, ultrahigh molecular weight polypropylene, ultrahigh molecular weight polyacrylate, ultrahigh molecular weight isotactic polypropylene, ultrahigh molecular weight polymethylmethacrylate.
wherein the ultrahigh molecular weight polymer is present in an amount of at least 2 wt% based on the total weight of the dry components of the composite material;
wherein the ultrahigh molecular weight polymer is a polymer having a weight average molecular weight from 500,000 to 10,000,000.

8. An article formed from or comprising the filament according to claim 7.

9. The article according to claim 8, wherein the article is a laminated structure.

## Patentansprüche

1. Verfahren zum Herstellen eines Artikels oder Filaments, der bzw. das Kompositmaterial umfasst oder daraus besteht, umfassend:
(a) Bilden einer Zusammensetzung, die ein Lösemittel, ein Polymer mit ultrahohem Molekulargewicht und ein Füllmaterial umfasst, wobei zumindest das Polymer mit ultrahohem Molekulargewicht im Lösemittel aufgelöst wird, um eine Lösung davon zu bilden; und
wobei das Füllmaterial aus einem oder mehr von Graphit, Bornitrid, metallischen Partikeln, metallischen Oxidpartikeln, Graphitflocken ausgewählt ist; und
wobei die Lösung eines oder mehr von Decalin, Xylen, Paraffinöl, Naphtalin enthält;
(b) Entfernen der Lösung, um das Kompositmaterial zu bilden;
wobei das Füllmaterial im Kompositmaterial in einer Menge von mehr als 60 Gew.% vorliegt, wobei das Polymer mit ultrahohem Molekulargewicht in einer Menge von zumindest 2 Gew.% vorliegt, beides basierend auf dem Gesamtgewicht der trockenen Komponenten des Kompositmaterials;
(c) weiter umfassend Bilden eines Artikels oder Filaments, der bzw. das das Kompositmaterial umfasst oder daraus besteht; wobei der Artikel in einem Schmelzschichtungsprozess oder einem 3D-Druckprozess gebildet ist;
wobei das Polymer mit ultrahohem Molekulargewicht aus einem oder mehr von Polyethylen mit ultrahohem Molekulargewicht, Polypropylen mit ultrahohem Molekulargewicht, Polyacrylat mit ultrahohem Molekulargewicht, isotaktischem Polypropylen mit ultrahohem Molekulargewicht, Polymethylmethacrylat mit ultrahohem Molekulargewicht ausgewählt ist;
wobei das Polymer mit ultrahohem Molekulargewicht ein Polymer mit einem durchschnittlichen Molekulargewicht von 500.000 bis 10.000.000 ist.

2. Verfahren nach Anspruch 1, wobei in (a) das Füllmaterial in der Form einer Suspension vorliegt.

3. Verfahren nach Anspruch 1, wobei das Füllmaterial in einer Menge von mehr als 80 Gew.% oder mehr als 90 Gew.% vorliegt.

4. Verfahren nach Anspruch 1, wobei das Polymer mit ultrahohem Molekulargewicht in einer Menge von weniger als 40 Gew.%, zum Beispiel bis zu 39 Gew.%, und zumindest 2 Gew.% oder zumindest 5 Gew.% vorliegt.

5. Verfahren nach Anspruch 1, wobei die Zusammensetzung aus dem Füllmaterial und der Lösung eines Polymers mit ultrahohem Molekulargewicht besteht.

6. Verwendung eines Kompositmaterials in einem Schmelzschichtungsprozess oder einem 3D-Druckprozess; wobei das Kompositmaterial ein Polymer mit ultrahohem Molekulargewicht und ein Füllmaterial umfasst, wobei das Füllmaterial im Kompositmaterial in einer Menge von mehr als 90 Gew.% vorliegt; und wobei das Füllmaterial geeignet ist, die Wärmeleitfähigkeit des Polymers mit ultrahohem Molekulargewicht zu erhöhen; und wobei das Kompositmaterial in der Form eines Filaments ist;
wobei das Polymer mit ultrahohem Molekulargewicht aus einem oder mehr von Polyethylen mit ultrahohem Molekulargewicht, Polypropylen mit ultrahohem Molekulargewicht, Polyacrylat mit ultrahohem Molekulargewicht, isotaktischem Polypropylen mit ultrahohem Molekulargewicht, Polymethylmethacrylat mit ultrahohem Molekulargewicht ausgewählt ist;
wobei das Füllmaterial aus einem oder mehr aus Graphit, Bornitrid, metallischen Partikeln, metallischen Oxidpartikeln, Graphitflocken ausgewählt ist;
wobei das Polymer mit ultrahohem Molekulargewicht in einer Menge von zumindest 2 Gew.% vorliegt, basierend auf dem Gesamtgewicht der trockenen Komponenten des Kompositmaterials;
wobei das Polymer mit ultrahohem Molekulargewicht ein Polymer mit einem durchschnittlichen Molekulargewicht von 500.000 bis 10.000.000 ist.

7. Filament zur Verwendung in einem Schmelzschichtungsprozess oder einem 3D-Druckprozess, umfassend ein Kompositmaterial;
wobei das Kompositmaterial ein Polymer mit ultrahohem Molekulargewicht und ein Füllmaterial umfasst, wobei das Füllmaterial im Kompositmaterial in einer Menge von mehr als 90 Gew.% vorliegt; und
wobei das Füllmaterial aus einem oder mehr von Graphit, Bornitrid, metallischen Partikeln, metallischen Oxidpartikeln, Graphitflocken ausgewählt ist; und
wobei das Polymer mit ultrahohem Molekulargewicht aus einem oder mehr von Polyethylen mit ultrahohem Molekulargewicht, Polypropylen mit ultrahohem Molekulargewicht, Polyacrylat mit ultrahohem Molekulargewicht, isotaktischem Polypropylen mit ultrahohem Molekulargewicht, Polymethylmethacrylat mit ultrahohem Molekulargewicht ausgewählt ist;
wobei das Polymer mit ultrahohem Molekulargewicht in einer Menge von zumindest 2 Gew.% vorliegt, basierend auf dem Gesamtgewicht der trockenen Komponenten des Kompositmaterials;
wobei das Polymer mit ultrahohem Molekulargewicht ein Polymer mit einem durchschnittlichen Molekulargewicht von 500.000 bis 10.000.000 ist.

8. Artikel, der aus dem Filament nach Anspruch 7 gebildet ist oder dieses umfasst.

9. Artikel nach Anspruch 8, wobei der Artikel eine laminierte Struktur ist.

## Revendications

1. Procédé de préparation d'un article ou d'un filament comprenant ou constitué d'un matériau composite comprenant :
(a) la formation d'une composition comprenant un solvant, un polymère de poids moléculaire ultra-élevé et un matériau de charge, dans lequel au moins le polymère de poids moléculaire ultra-élevé est dissous dans ledit solvant pour en former une solution ; et
dans lequel le matériau de charge est choisi parmi un ou plusieurs du graphite, du nitrure de bore, de particules métalliques, de particules d'oxydes métalliques, de flocons de graphite ; et
dans lequel le solvant comprend un ou plusieurs de la décaline, du xylène, d'une huile paraffinique, du naphtalène ;
(b) le retrait du solvant pour former ledit matériau composite ;
dans lequel le matériau de charge est présent dans le matériau composite en quantité supérieure à 60 % en poids, dans lequel le polymère de poids moléculaire ultra-élevé est présent en quantité d'au moins 2 % en poids, tous deux basés sur le poids total des composants secs du matériau composite ;
(c) comprenant en outre la formation d'un article ou d'un filament comprenant ou constitué du matériau composite ; dans lequel l'article est formé dans un procédé de modélisation par dépôt fusionné ou un procédé d'impression 3D ;
dans lequel le polymère de poids moléculaire ultra-élevé est choisi parmi un ou plusieurs du polyéthylène de poids moléculaire ultra-élevé, du polypropylène de poids moléculaire ultra-élevé, du polyacrylate de poids moléculaire ultra-élevé, du polypropylène isotactique de poids moléculaire ultra-élevé, du poly(méthacrylate de méthyle) de poids moléculaire ultra-élevé ;
dans lequel le polymère de poids moléculaire ultra-élevé est un polymère ayant un poids moléculaire moyen en poids de 500 000 à 10 000 000.

2. Procédé selon la revendication 1, dans lequel dans (a) le matériau de charge est présent sous la forme d'une suspension.

3. Procédé selon la revendication 1, dans lequel le matériau de charge est présent en quantité supérieure à 80 % en poids ou supérieure à 90 % en poids.

4. Procédé selon la revendication 1, dans lequel le polymère de poids moléculaire ultra-élevé est présent en quantité de moins de 40 % en poids, par exemple jusqu'à 39 % en poids, et d'au moins 2 % en poids ou d'au moins 5 % en poids.

5. Procédé selon la revendication 1, dans lequel la composition est constituée du matériau de charge et de la solution de polymère de poids moléculaire ultra-élevé.

6. Utilisation d'un matériau composite dans un procédé de modélisation par dépôt fusionné ou un procédé d'impression 3D ; ledit matériau composite comprenant un polymère de poids moléculaire ultra-élevé et un matériau de charge, dans lequel le matériau de charge est présent dans le matériau composite en quantité supérieure à 90 % en poids ; et dans lequel le matériau de charge convient pour augmenter la conductibilité thermique du polymère de poids moléculaire ultra-élevé ; et dans lequel le matériau composite se présente sous la forme d'un filament ;
dans lequel le polymère de poids moléculaire ultra-élevé est choisi parmi un ou plusieurs du polyéthylène de poids moléculaire ultra-élevé, du polypropylène de poids moléculaire ultra-élevé, du polyacrylate de poids moléculaire ultra-élevé, du polypropylène isotactique de poids moléculaire ultra-élevé, du poly(méthacrylate de méthyle) de poids moléculaire ultra-élevé ;
dans lequel le matériau de charge est choisi parmi un ou plusieurs du graphite, du nitrure de bore, de particules métalliques, de particules d'oxyde métallique, de flocons de graphite ;
dans lequel le polymère de poids moléculaire ultra-élevé est présent en quantité d'au moins 2 % en poids sur la base du poids total des composants secs du matériau composite ;
dans lequel le polymère de poids moléculaire ultra-élevé est un polymère ayant un poids moléculaire moyen en poids de 500 000 à 10 000 000.

7. Filament pour utilisation dans un procédé de modélisation par dépôt fusionné ou un procédé d'impression 3D comprenant un matériau composite ;
dans lequel le matériau composite comprend un polymère de poids moléculaire ultra-élevé et un matériau de charge, dans lequel le matériau de charge est présent dans le matériau composite en quantité supérieure à 90 % en poids ; et
dans lequel le matériau de charge est choisi parmi un ou plusieurs du graphite, du nitrure de bore, de particules métalliques, de particules d'oxyde métallique, de flocons de graphite ; et
dans lequel le polymère de poids moléculaire ultra-élevé est choisi parmi un ou plusieurs du polyéthylène de poids moléculaire ultra-élevé, du polypropylène de poids moléculaire ultra-élevé, du polyacrylate de poids moléculaire ultra-élevé, du polypropylène isotactique de poids moléculaire ultra-élevé, du poly(méthacrylate de méthyle) de poids moléculaire ultra-élevé ;
dans lequel le polymère de poids moléculaire ultra-élevé est présent en quantité d'au moins 2 % en poids sur la base du poids total des composants secs du matériau composite ;
dans lequel le polymère de poids moléculaire ultra-élevé est un polymère ayant un poids moléculaire moyen en poids de 500 000 à 10 000 000.

8. Article formé du filament selon la revendication 7 ou comprenant celui-ci.

9. Article selon la revendication 8, dans lequel l'article est une structure stratifiée.
